# EUROPÄISCHE PATENTSCHRIFT

(11) **EP 4 175 312 B1**
(45) Veröffentlichungstag und Bekanntmachung des Hinweises auf die Patenterteilung: **12.02.2025**
(21) Anmeldenummer: 22200623.1
(22) Anmeldetag: 10.10.2022
(51) Int. Cl.: H04N 25/78, H04N 25/77, H04N 25/65

(54) **BILDSENSOR**
IMAGE SENSOR
CAPTEUR D'IMAGE

(30) Priorität: 27.10.2021 DE 102021128022
(43) Veröffentlichungstag der Anmeldung: 03.05.2023
(73) Patentinhaber: Arnold & Richter Cine Technik GmbH & Co. Betriebs KG, 80807 München (DE)
(72) Erfinder: CIESLINSKI, Michael, München (DE)
(74) Vertreter: Manitz Finsterwald Patent- und Rechtsanwaltspartnerschaft mbB

(56) Entgegenhaltungen:
- EP-A1- 2 800 356
- WO-A1-00/19706
- US-A1- 2016 225 803
- US-A1- 2018 054 576

## Beschreibung

Die Erfindung betrifft einen Bildsensor für elektronische Kameras, insbesondere CMOS-Bildsensor, mit einer Vielzahl von Pixeln zur Erzeugung von belichtungsabhängigen Signalen.

Elektronische Kameras werden beispielsweise als Bewegtbildkameras verwendet, um Bewegtbildsequenzen aufzunehmen, die später im Kino vorgeführt werden. Dabei ist es wichtig, dass diese Kameras eine hohe Bildqualität aufweisen. Insbesondere werden bei der Nachbearbeitung die aufgenommenen Bilder noch in Helligkeit, Kontrast und Farbe verändert, und das Endprodukt - die bearbeitete Bewegtbildsequenz bzw. der Film - wird im Kino auf eine große Leinwand projiziert.

Elektronische Kameras verwenden typischerweise Bildsensoren aus Silizium in CMOS- oder CCD-Technologie. Bei derartigen Bildsensoren bilden die Pixel ein Pixelfeld, und sie sind in Zeilen und Spalten angeordnet. Die Pixel können mit einem Farbfiltermuster (Color Filter Array, CFA) versehen sein, um eine unterschiedliche spektrale Empfindlichkeit zu besitzen. Jedes Pixel umfasst zumindest: ein lichtempfindliches Element, um aus einfallendem Licht elektrische Ladung zu erzeugen; ferner einen Ausleseknoten; ein Transfer-Gate, um wahlweise das lichtempfindliche Element mit dem Ausleseknoten zu koppeln und erzeugte Ladung von dem lichtempfindlichen Element zu dem Ausleseknoten zu transferieren; einen Wandler-Transistor, um die an dem Ausleseknoten vorhandene Ladung in ein Spannungssignal an einem Signalausgang umzusetzen; und einen Auswahl-Schalter, der mit dem Signalausgang des Wandler-Transistors über eine Ausgangsleitung verbunden ist, um den Signalausgang des Wandler-Transistors wahlweise mit einer zugeordneten Ausleseleitung des Bildsensors zu koppeln, die üblicherweise als Spaltenleitung bezeichnet wird.

Das jeweilige Pixel kann auch einen Rücksetz-Schalter umfassen, um wahlweise den Ausleseknoten mit einem Rücksetz-Potential zu koppeln. Ein derartiger Bildsensor kann ferner eine Steuerschaltung zur Erzeugung von Steuersignalen für das jeweilige Transfer-Gate, den jeweiligen Auswahl-Schalter und ggf. den jeweiligen Rücksetz-Schalter der Pixel umfassen, um wahlweise Bildsignale (oder Bildsignale und Referenzsignale) aus dem Ausleseknoten auszulesen. Der Wandler-Transistor kann einen Impedanzwandler bilden, der in Abhängigkeit von einer an seinem Eingang vorhandenen Ladungsmenge ein Spannungssignal an seinem Signalausgang erzeugt. Die Spaltenleitungen des Bildsensors können mit einem jeweiligen Ausleseverstärker (üblicherweise als Spaltenverstärker bezeichnet) verbunden sein, um den Signalausgang des Wandler-Transistors wahlweise mit einer Spaltenleitung des Bildsensors zu koppeln, die mehreren Pixeln des Bildsensors zugeordnet ist. Mehrere Spaltenleitungen des Bildsensors können ferner mit einem Signalbus verbunden sein, der zu einem oder mehreren Spaltenverstärker(n) führt, um die (ggf. bereits vorverstärkten) Spannungssignale mehrerer Spaltenleitungen zu verstärken. Die Pixel des Bildsensors werden beispielsweise zeilenweise adressiert, und die Signale der Pixel werden zu den Spaltenverstärkern (beispielsweise am Rand des Pixelfelds) und von dort zu einem Ausgang geleitet, digitalisiert und optional mit Kalibrierdaten verrechnet.

Um auch bei schlechten Lichtverhältnissen Bewegtbildsequenzen aufnehmen zu können und um die Kosten für künstliche Beleuchtungsmaßnahmen an einem Filmset gering zu halten, ist es erwünscht, dass die Bildsensoren elektronischer Kameras eine hohe Lichtempfindlichkeit aufweisen.

US 2016/225803 A1 offenbart einen Bildsensor mit den Merkmalen des Oberbegriffs des Anspruchs 1. Der Bildsensor weist ein Bildsensorpixel auf, das ein lichtempfindliches Element, einen Ausleseknoten, ein Transfer-Gate, einen Wandler-Transistor, einen Auswahl-Schalter sowie einen Eingangskondensator, einen Spaltenverstärker, eine Spaltenleitung, eine Rückkoppelleitung und einen Rücckoppelkondensator umfasst, der die Rückkoppelleitung mit dem Ausleseknoten verbindet, wobei zwischen der Rückkoppelleitung und dem Rückkoppelkondensator ein Schalter angeordnet ist.

WO 00/19706 A1 lehrt eine Pixelanordnung, bei der ein Rückkopplungsverstärker verwendet wird, um ein Reset-Rauschen zu minimieren, wobei während eines Auslesevorgangs ein durch den Rückkopplungskondensator C_{fb} verstärktes Signal auf eine Speicherkapazität übertragen wird, wodurch das Reset-Rauschen unterdrückt wird, wobei der Rückkoppelkondensator über einen Schalter mit einer Rückkoppelleitung verbunden ist.

US 2018/054576 A1 beschreibt einen Bildsensor, bei dem die von einer Fotodiode erzeugte Ladung mit zwei unterschiedlichen Verstärkungen simultan zueinander ausgelesen werden, wobei eine Spaltenleitung eines Hochverstärkerausgangs über einen Schalter mit einem Rückkopplungskondensator verbunden ist.

EP 800 356 A1 beschreibt ebenfalls einen Bildsensor welcher über einen Rückkopplungskondensator ein Spaltenverstärkersignal in die Pixel zurückkoppelt.

Es ist Aufgabe der vorliegenden Erfindung, einen Bildsensor mit verbesserter Lichtempfindlichkeit zu schaffen.

Der vorliegenden Erfindung liegen die folgenden Überlegungen zugrunde.

Die Lichtempfindlichkeit wird wesentlich durch das Rauschen des Bildsensors bestimmt. Kritisch ist bei schlechten Lichtverhältnissen vor allem der unterste Signalbereich. Das Rauschen des Bildsensors setzt sich im Wesentlichen aus dem Rauschen des jeweiligen Pixels und dem Rauschen des Auslesepfads zusammen. Das Rauschen des Auslesepfads lässt sich durch geeignete Auslegung auf Werte von z.B. 80 µV (Mikrovolt) reduzieren, so dass es gegenüber dem Rauschen des Pixels von z.B. 180 µV eine lediglich untergeordnete Rolle spielt.

Die Rausch-Spannung in dem jeweiligen Pixel wird wesentlich durch den Wandler-Transistor (z.B. Source-Folger, SF) bestimmt. Das Rauschen des Pixels ist das Verhältnis zwischen der Signal-Spannung, die ein Elektron verursacht, und der Rauschspannung des Wandler-Transistors (SF). Um das Rauschen zu reduzieren, muss also entweder die Rauschspannung des Wandler-Transistors verringert werden, oder die Signal-Spannung, die ein Elektron verursacht (sogenannte Steilheit), muss erhöht werden.

Wenn ein Photon in dem lichtempfindlichen Element (z.B. Pinned-Diode) absorbiert wird, erzeugt es dort ein Elektron. Durch kurzzeitiges Ansteuern des Transfer-Gate des Pixels wird dieses Elektron zu dem Ausleseknoten (z.B. Floating Diffusion, FD) transferiert (wobei bei einem Auslesevorgang typischerweise eine Vielzahl von photoelektrisch erzeugten Elektronen transferiert werden). Die Ladung dieses jeweiligen Elektrons wirkt auf die Kapazität des Ausleseknotens (FD) und bewirkt dort eine Spannungsänderung, die umgekehrt proportional zur Kapazität des Ausleseknotens ist. Um die von einem Elektron verursachte Signal-Spannung zu erhöhen und hierdurch das Rauschen des Pixels zu reduzieren, kann also versucht werden, die Kapazität des Ausleseknotens (FD) zu verringern.

Bei üblichen Bildsensoren kann der Ausleseknoten des jeweiligen Pixels eine Kapazität von beispielsweise 1,6 fF (Femtofarad) aufweisen, wodurch eine Spannungsänderung von ca. 100 µV pro Elektron erreicht wird. Durch weitere Methoden, wie beispielsweise den Einsatz einer Guarding-Struktur, kann die FD-Kapazität auf beispielsweise 0,6 fF reduziert werden, wodurch eine Spannungsänderung von ca. 260 µV pro Elektron erreicht werden kann.

Es ist jedoch wünschenswert, das Rauschen weiter zu reduzieren. Dies kann erreicht werden, indem die Kapazität des Ausleseknotens noch weiter verringert wird und die von einem Elektron am Ausleseknoten verursachte Signalspannung somit erhöht wird. Bei der Kapazität des Ausleseknotens handelt es sich im Wesentlichen um eine parasitäre Kapazität nach Masse. Damit derartige Kapazitäten wirkungslos bzw. möglichst klein werden, muss die Spannung am Ausleseknoten konstant bleiben. Wenn jedoch Elektronen von dem lichtempfindlichen Element zu dem Ausleseknoten transferiert werden und hierdurch eine Spannungsänderung an dem Ausleseknoten bewirken, beeinflusst diese Spannungsänderung wiederum die Kapazität des Ausleseknotens. Um die Empfindlichkeit des Bildsensors deutlich zu steigern, muss also die Spannung am Ausleseknoten konstant gehalten werden, sodass eine geringe Kapazität am Ausleseknoten und somit eine höhere Signalspannung pro Elektron erreicht und auch bei einem Ladungstransfer zu dem Ausleseknoten beibehalten wird.

Die genannte Aufgabe wird durch einen Bildsensor mit den Merkmalen des Anspruchs 1 gelöst.

Bei dem Bildsensor ist der Spaltenleitung ein Spaltenverstärker zugeordnet, wobei die Spaltenleitung über einen Eingangskondensator mit einem negativen Eingang des Spaltenverstärkers gekoppelt oder (z.B. über einen Schalter) koppelbar ist. Der Spaltenverstärker weist einen Verstärkerausgang zum Ausgeben eines Verstärkerausgangssignals auf, wobei der Verstärkerausgang mit einer Spaltenausleseschaltung und mit einer Ausgleichsleitung verbunden ist. Die Ausgleichsleitung kann auch als Kompensationsleitung bezeichnet werden. Die Ausgleichsleitung ist über einen jeweiligen Rückkoppelkondensator mit dem jeweiligen Ausleseknoten derjenigen Pixel gekoppelt, die der Spaltenleitung zugeordnet sind, wobei die Ausgleichsleitung direkt mit dem Rückkoppelkondensator verbunden ist.

Somit kann das Spannungssignal, das an dem Signalausgang des Wandler-Transistors des jeweiligen Pixels erzeugt wird, effektiv an den Ausleseknoten des jeweiligen Pixels kapazitiv rückgekoppelt werden. Mit anderen Worten ist eine negative Rückkopplungsschleife gebildet, welche die Spaltenleitung, den Eingangskondensator, den Spaltenverstärker (über dessen negativen Eingang), die Ausgleichsleitung und den Rückkoppelkondensator umfasst.

Der mit dem Ausleseknoten (indirekt) gekoppelte oder koppelbare Rückkoppelkondensator sorgt dafür, dass bei einem Ladungstransfer von dem lichtempfindlichen Element auf den Ausleseknoten des jeweiligen Pixels eine Regelung der Spannung des Ausleseknotens durch den Spaltenverstärker bzw. den Verstärkerausgang möglich ist. Insbesondere kann die Spannung am Ausleseknoten so geregelt werden, dass eine verringerte Kapazität am Ausleseknoten vorliegt. Somit kann an dem Ausleseknoten des jeweiligen Pixels eine erhöhte Signalspannung pro Elektron erreicht werden.

Der Rückkoppelkondensator bestimmt somit die Signalspannung pro Elektron und damit die Empfindlichkeit des Pixels. Durch die Rückkopplung und eine entsprechende Dimensionierung des Rückkoppelkondensators kann eine gewünschte Signalspannung pro Elektron erreicht werden. Um eine Signalspannung von beispielsweise 4000 µV pro Elektron zu erhalten, ist eine Kapazität des Ausleseknotens von ca. 40 aF (Attofarad) notwendig. Der Rückkoppelkondensator kann dabei sehr klein dimensioniert werden, da vor allem die Kapazität zwischen der Spaltenleitung und dem Ausleseknoten ausschlaggebend ist.

Die vorstehend genannten Zahlenwerte sind beispielhaft zu verstehen. Der durch den Rückkoppelkondensator erzielte Effekt kann auch stärker oder schwächer ausfallen.

Eine derartige aktive Begrenzung der Kapazität des Ausleseknotens eignet sich vor allem für geringe Signalstärken bei schlechten Lichtverhältnissen, also für eine geringe Anzahl von Elektronen, die pro Betätigung des Transfer-Gate von dem lichtempfindlichen Element zu dem Ausleseknoten transferiert werden. Das lichtempfindliche Element des jeweiligen Pixels kann auf diese Weise auch in mehreren Wiederholungen sukzessive ausgelesen werden, wobei Teilergebnisse erzielt werden, die miteinander aufaddiert werden können. Für größere Ladungsmengen in dem lichtempfindlichen Element können hingegen herkömmliche Ausleseverfahren zur Anwendung gelangen, ohne die erläuterte Rückkopplung über den Rücckoppelkondensator.

Die Erfindung kann auch bei einer Pixelarchitektur und/oder Auslesearchitektur zum Einsatz gelangen, die komplexer ist/sind als vorstehend genannt. Beispielsweise kann innerhalb des jeweiligen Pixels ein Überlauf-Kondensator mit einem zusätzlichen Transfer-Gate vorgesehen sein, wie nachfolgend noch erläutert wird. Bei einigen Ausführungsformen kann das jeweilige Pixel auch mehrere lichtempfindliche Elemente aufweisen, die über ein jeweiliges Transfer-Gate mit einem gemeinsamen Ausleseknoten (FD) verbunden oder koppelbar sind (sogenanntes "sharing") und/oder die (zeitlich alternierend) einem gemeinsamen Wandler-Transistor zugeordnet sind. Ferner ist es möglich, dass der Bildsensor für jede Spalte von Pixeln mehrere Spaltenleitungen aufweist, wobei mehrere Spaltenleitungen über einen Signalbus mit einem gemeinsamen Spaltenverstärker gekoppelt oder koppelbar sein können. Ferner ist es möglich, dass für jedes Pixel mehrere Kanäle mit unterschiedlichen Verstärkungsfaktoren vorgesehen sind.

Sofern im Zusammenhang mit der Erfindung auf eine elektrische Spannung oder ein elektrisches Potential Bezug genommen wird, ist zu berücksichtigen, dass die elektrische Spannung als Differenz zwischen einem ersten Potential (z.B. einem erzeugten oder betrachteten Potential) und einem zweiten Potential (z.B. einem Bezugspotential) definiert ist. Insofern können die beiden Begriffe, sofern das jeweilige Bezugspotential gegeben ist, letztlich gleichbedeutend sein oder gleichbedeutend verwendet werden.

Sofern im Zusammenhang mit der Erfindung auf Leitungen in dem Bildsensor Bezug genommen wird, sind hierunter elektrisch leitende Verbindungen zu verstehen, die insbesondere auf oder innerhalb eines Substrats gebildet sein können, beispielsweise durch Metallisierung oder Dotierung.

Im Folgenden werden weitere Ausführungsformen der Erfindung erläutert.

Bei einigen Ausführungsformen kann der Spaltenverstärker dazu ausgebildet sein, das Verstärkerausgangssignal in Abhängigkeit von dem über die Spaltenleitung an dem Eingangskondensator empfangenen Spannungssignal des Wandler-Transistors des jeweiligen Pixels zu erzeugen und das Verstärkerausgangssignal an die Spaltenausleseschaltung und über die Ausgleichsleitung an den Rückkoppelkondensator auszugeben.

Beispielsweise kann eine an dem Ausleseknoten erzeugte elektrische Spannung über den Wandler-Transistor bei geöffnetem Auswahl-Schalter als Spannungssignal auf die Spaltenleitung ausgegeben werden. Insbesondere kann das Spannungssignal auf der Spaltenleitung der Spannung folgen (insbesondere als ein direkt proportionaler Wert), die an dem Ausleseknoten des jeweiligen Pixels etwa aufgrund eines Ladungstransfers über das Transfer-Gate erzeugt worden ist. Die zwischen der Spaltenleitung und dem negativen Eingang des Spaltenverstärkers vorliegende Spannungsdifferenz kann dafür sorgen, dass sich der zwischen der Spaltenleitung und dem negativen Verstärkereingang angeordnete Eingangskondensator entsprechend der Spannungsdifferenz auflädt. Je nach Betriebsart des Spaltenverstärkers kann das Verstärkerausgangssignal einen unterschiedlichen Wert annehmen, wie nachstehend noch erläutert wird. Das Verstärkerausgangssignal wird sowohl an die Spaltenausleseschaltung als auch über die Ausgleichsleitung an den Rückkoppelkondensator übermittelt. Die Spaltenausleseschaltung kann entsprechende Signalwerte ausgeben, die letztlich einer Bildinformation entsprechen. Über die Ausgleichsleitung und den Rückkoppelkondensator kann die erläuterte Rückkopplungsschleife zu dem jeweiligen Ausleseknoten gebildet werden.

Bei einigen Ausführungsformen kann die Spaltenausleseschaltung dazu ausgebildet sein, das Verstärkerausgangssignal auszulesen. Insbesondere kann die Spaltenausleseschaltung dazu ausgebildet sein, einen dem Verstärkerausgangssignal entsprechenden Signalwert auszugeben.

Insbesondere kann die Spaltenausleseschaltung bei einigen Ausführungsformen dazu ausgebildet sein, als Verstärkerausgangssignale ein Referenzsignal und ein Bildsignal auszulesen und diese miteinander zu verrechnen (insbesondere durch Subtraktion), um Offset-Werte zu eliminieren (sog. Correlated Double Sampling), wie nachfolgend noch erläutert wird.

Bei einigen Ausführungsformen können der Wandler-Transistor des jeweiligen Pixels, die Spaltenleitung, der Eingangskondensator, der Spaltenverstärker, die Ausgleichsleitung und der Rückkoppelkondensator des jeweiligen Pixels eine negative Rückkopplungsschleife für den Ausleseknoten des jeweiligen Pixels bilden. Durch eine derartige negative Rückkopplungsschleife kann einem unerwünschten Anstieg der Spannung und somit einer unerwünschten Erhöhung der Kapazität des Ausleseknotens infolge eines Ladungstransfers entgegengewirkt werden.

Der Eingangskondensator, der Spaltenverstärker und der Rückkoppelkondensator des jeweiligen Pixels können insbesondere dazu ausgebildet sein (angeordnet und dimensioniert), um eine Spannung an dem Ausleseknoten des jeweiligen Pixels im Wesentlichen konstant zu halten.

Eine derartige negative Rückkopplung muss nicht permanent erfolgen. Sondern der Spaltenverstärker kann auch eine lediglich temporäre Rückkopplung über die genannten Elemente bilden. Für den Zeitraum der Rückkopplung kann der Spaltenverstärker die Spannung an der Ausgleichsleitung so regeln, dass die Spannung an dem Ausleseknoten des jeweiligen Pixels auch im Falle eines Ladungstransfers (von dem lichtempfindlichen Element, über das Transfer-Gate) im Wesentlichen konstant bleibt.

Bei einigen Ausführungsformen können der Eingangskondensator, der Spaltenverstärker und der Rückkoppelkondensator des jeweiligen Pixels dazu ausgebildet sein, im Falle eines Ladungszuwachses an dem Ausleseknoten des jeweiligen Pixels eine Spannung an der Ausgleichsleitung zu erhöhen und hierdurch eine Spannungsänderung an dem Ausleseknoten im Wesentlichen zu kompensieren. Insbesondere kann für die Rückkopplung ausgenutzt werden, dass die Spannung an der Spaltenleitung der Spannung am Ausleseknoten folgt und die Spannung an der Spaltenleitung über den Eingangskondensator auch am Spaltenverstärker verfügbar ist.

Bei einigen Ausführungsformen kann der Spaltenverstärker - zusätzlich zu dem negativen Verstärkereingang - einen positiven Verstärkereingang umfassen, an dem eine Referenzspannung anliegt. Die Referenzspannung kann insbesondere als ein Referenzwert verwendet werden, um die erläuterte Rückkopplung auszuführen und eine Genauigkeit der Messung zu verbessern. Insbesondere kann durch eine Gegenkopplung die Referenzspannung auf den negativen Verstärkereingang gespiegelt werden, um diesen und den hiermit verbundenen Eingangskondensator auf definierte Startwerte für eine nachfolgende Messung zu bringen.

Insbesondere kann der Spaltenverstärker einen Operationsverstärker mit einem negativen Verstärkereingang und einem positiven Verstärkereingang umfassen.

Bei einigen Ausführungsformen kann der negative Verstärkereingang des Spaltenverstärkers über eine Gegenkopplungsleitung und einen Gegenkopplungsschalter mit dem Verstärkerausgang verbindbar sein, wobei durch ein Schließen des Gegenkopplungsschalters der Spaltenverstärker in einen Gegenkopplungsbetrieb gebracht werden kann, in dem an dem Eingangskondensator eine Potentialdifferenz zwischen der Spannung an der Spaltenleitung und der Referenzspannung eingestellt wird. Insbesondere kann der Spaltenverstärker in dem Gegenkopplungsbetrieb als ein Spannungsfolger arbeiten, d.h. das Verstärkerausgangssignal kann der Eingangsspannung am positiven Eingang des Spaltenverstärkers, d.h. der angelegten Referenzspannung, entsprechen.

Durch ein nachfolgendes Öffnen des Gegenkopplungsschalters kann der Spaltenverstärker ausgehend von dem Gegenkopplungsbetrieb in einen Verstärkungsbetrieb gebracht werden, in dem das Verstärkerausgangssignal eine gegenüber dem Gegenkopplungsbetrieb geänderte Potentialdifferenz an dem Eingangskondensator repräsentiert. Die Änderung der Potentialdifferenz an dem Eingangskondensator kann insbesondere aus einem zwischenzeitlichen Ladungstransfer von dem lichtempfindlichen Element zu dem Ausleseknoten des jeweiligen Pixels und einer entsprechenden Änderung des Spannungssignals des jeweiligen Wandler-Transistors resultieren. In dem Verstärkungsbetrieb des Spaltenverstärkers kann folglich das Verstärkerausgangssignal eine Spannungsänderung an dem Ausleseknoten des jeweiligen Pixels und somit die Anzahl der zu dem Ausleseknoten transferierten Elektronen repräsentieren. In dem Verstärkungsbetrieb kann der Spaltenverstärker insbesondere als ein Differenzverstärker arbeiten.

Bei einigen Ausführungsformen kann der Bildsensor eine Steuerschaltung aufweisen, die dazu ausgebildet ist, für ein Auslesen des jeweiligen Pixels zunächst den Spaltenverstärker in den Gegenkopplungsbetrieb zu bringen; nachfolgend den Spaltenverstärker in den Verstärkungsbetrieb zu bringen; danach das Transfer-Gate des jeweiligen Pixels kurzzeitig zumindest teilweise zu öffnen, um Ladung in den Ausleseknoten des jeweiligen Pixels zu übertragen; und danach die Spaltenausleseschaltung zum Auslesen des Verstärkerausgangssignals anzusteuern, welches dann einen Signalwert bzw. Bildsignalwert des jeweiligen Pixels repräsentiert. Die Steuerschaltung kann beispielsweise eine integrierte Schaltung, einen Mikroprozessor oder ein FPGA umfassen.

Während des gesamten derartigen Auslesevorgangs kann der Auswahl-Schalter des jeweiligen Pixels geschlossen sein. Der Gegenkopplungsbetrieb kann, wie bereits erläutert, durch ein Schließen des Gegenkopplungsschalters eingeleitet werden. Durch den Gegenkopplungsbetrieb kann der Eingangskondensator auf einen definierten Startwert gebracht werden. Der nachfolgende Verstärkungsbetrieb kann durch ein Öffnen des Gegenkopplungsschalters eingeleitet werden. In dem Verstärkungsbetrieb kann das Verstärkerausgangssignal die zu dem Ausleseknoten des jeweiligen Pixels transferierte Ladung repräsentieren. Zusätzlich kann sich der Spaltenverstärker während des Verstärkungsbetriebs in einem Rückkopplungsbetrieb befinden, d.h. das Verstärkerausgangssignal wird über die Ausgleichsleitung und den Rückkoppelkondensator an den Ausleseknoten des jeweiligen Pixels kapazitiv rückgekoppelt.

Bei einigen Ausführungsformen kann das jeweilige Pixel ferner einen Rücksetz-Schalter (Reset-Schalter) aufweisen, um wahlweise den Ausleseknoten mit einem Rücksetz-Potential zu koppeln. Die Steuerschaltung kann dazu ausgebildet sein, den Rücksetz-Schalter des jeweiligen Pixels kurzzeitig zu schließen, um die in dem Ausleseknoten des jeweiligen Pixels vorhandene Ladung zu löschen; und danach, in dem Verstärkungsbetrieb des Spaltenverstärkers und vor dem Ansteuern (d.h. Öffnen) des Transfer-Gate, die Spaltenausleseschaltung zum Auslesen des Verstärkerausgangssignals anzusteuern, welches dann einen Referenzwert bzw. Referenzsignalwert des jeweiligen Pixels repräsentiert.

Auf Basis des ausgelesenen Referenzwerts kann eine Höhe der durch den Ladungstransfer auf den Ausleseknoten erzeugten Spannungsänderung mit höherer Genauigkeit bestimmt werden. Insbesondere kann der Referenzwert von dem genannten (bei geöffnetem Transfer-Gate ermittelten) Signalwert subtrahiert werden (sog. Correlated Double Sampling).

Bei einigen Ausführungsformen kann die Spaltenausleseschaltung hierfür einen Referenzwert-Auslesepfad und einen Signalwert-Auslesepfad aufweisen. Insbesondere kann das Auslesen des Referenzwerts über den Referenzwert-Auslesepfad und das Auslesen des Signalwerts über den Signalwert-Auslesepfad erfolgen, wobei das Auslesen des Referenzwerts und das Auslesen des Signalwerts zu unterschiedlichen Zeitpunkten erfolgen können.

Bei einigen Ausführungsformen kann das jeweilige Pixel ferner einen Überlauf-Kondensator und ein weiteres Transfer-Gate umfassen, um wahlweise den Ausleseknoten mit dem Überlauf-Kondensator zu koppeln. Hierdurch kann die Kapazität des Pixels wahlweise temporär erhöht werden, um bei starker Belichtung große Ladungsmengen von dem lichtempfindlichen Element aufnehmen zu können. Die genannte Steuerschaltung kann dazu ausgebildet sein, auch Steuersignale für das weitere Transfer-Gate zu erzeugen.

Die Erfindung wird nachfolgend anhand von Ausführungsbeispielen mit Bezug auf die Zeichnungen beschrieben, wobei gleiche oder gleichartige Elemente mit denselben Bezugszeichen gekennzeichnet sind.
- Fig. 1: zeigt einen Vier-Transistor-CMOS-Bildsensor, wobei von dem Bildsensor lediglich ein Pixel und eine der Spaltenleitung des Pixels zugeordnete Spaltenausleseschaltung dargestellt sind;
- Fig. 2: zeigt einen erfindungsgemäßen Bildsensor in einer der Fig. 1 entsprechenden Darstellungsweise;
- Fig. 3: zeigt eine alternative Ausführungsform des jeweiligen Pixels eines Bildsensors gemäß Fig. 2; und
- Fig. 4: zeigt ein Schaltdiagram für eine Steuerschaltung eines erfindungsgemäßen Bildsensors;

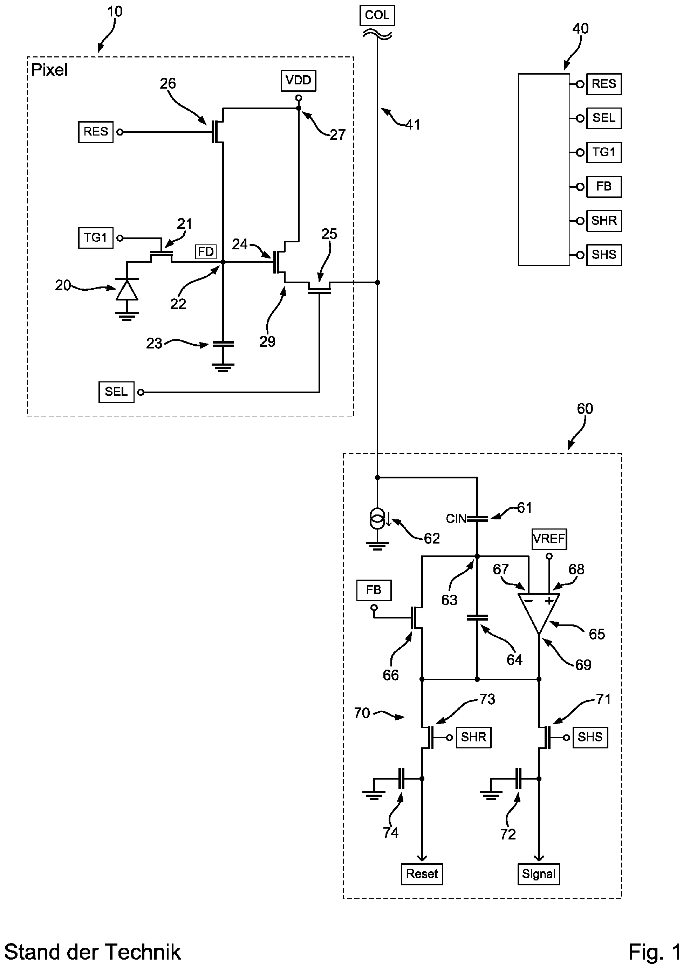

Die grundlegende Funktionsweise eines beispielhaften Vier-Transistor-Bildsensors des APS-Typs (aktiver Pixelsensor) wird zum besseren Verständnis der Erfindung nachfolgend mit Bezug auf Fig. 1 erläutert, wobei einzelne Komponenten dieses Bildsensors auch bei einem erfindungsgemäßen Bildsensor vorhanden sind. Grundsätzlich ist die vorliegende Erfindung nicht auf aktive Vier-Transistor-Bildsensoren beschränkt, sondern kann auch bei Bildsensoren mit weniger oder mehr als vier Transistoren je Pixel zum Einsatz gelangen, wie nachfolgend noch erläutert wird.

In Fig. 1 ist stellvertretend lediglich ein einziges Pixel 10 dargestellt, welches ein lichtempfindliches Element 20 in Form einer Photodiode umfasst, insbesondere einer sogenannten Pinned-Diode. Das lichtempfindliche Element 20 kann über einen Schalter in Form eines Transfer-Gate 21 wahlweise mit einem Ausleseknoten 22, der insbesondere als eine sogenannte Floating Diffusion (FD) ausgebildet sein kann, ladungsgekoppelt werden.

Der Ausleseknoten 22 ist mit dem Gate-Anschluss eines als Source-Folger ausgebildeten Wandler-Transistors 24 verbunden, der durch einen Feldeffekttransistor (FET) gebildet ist und eine Ladungs-Spannungs-Wandlerschaltung darstellt. Ferner ist der Ausleseknoten 22 über eine weitere Schalteinrichtung in Form eines Rücksetz-Schalters 26 mit einem Anschluss 27 einer (beispielsweise positiven) Spannungsversorgung VDD verbunden. Einer der beiden Kanalanschlüsse (Drain-Anschluss) des Wandler-Transistors 24 ist ebenfalls mit der positiven Spannungsversorgung VDD verbunden, wohingegen der andere der beiden Kanalanschlüsse (Source-Anschluss) des Wandler-Transistors 24 einen Signalausgang 29 bildet, an dem ein Spannungssignal ausgegeben wird und der mit einem Auswahl-Schalter 25 verbunden ist. Der Auswahl-Schalter 25 fungiert als Zeilenauswahlschalter, wobei durch Aktivieren bzw. Schließen des Auswahl-Schalters 25 der Signalausgang 29 des Wandler-Transistors 24 wahlweise mit einer dem dargestellten Pixel 10 zugeordneten Spaltenleitung 41 gekoppelt werden kann.

Die Spaltenleitung 41 (COL) ist dafür vorgesehen, mehrere oder sämtliche in einer zugehörigen Spalte angeordneten gleichartigen Pixel 10 mit einer gemeinsamen Spaltenverstärkerschaltung 60 zu verbinden, die beispielsweise außerhalb des Pixelfelds des Bildsensors angeordnet ist. Dies geschieht alternierend durch temporäres Schließen des jeweiligen Auswahl-Schalters 25 der Pixel 10.

Die Spaltenverstärkerschaltung 60 umfasst einen Eingangskondensator 61 (CIN), der mit der Spaltenleitung 41 und einem Spannungsknoten 63 verbunden ist. Ferner umfasst die Spaltenverstärkerschaltung 60 einen Spaltenverstärker 65, dessen negativer Eingang 67 mit dem Spannungsknoten 63 verbunden ist und an dessen positivem Eingang 68 eine Referenzspannung VREF angelegt wird. Ein Verstärkerkondensator 64 ist ferner mit einem Ausgang 69 des Verstärkers und dem Spannungsknoten 63 verbunden. Parallel dazu ist über eine Gegenkopplungsleitung ein Gegenkopplungsschalter 66 mit dem Verstärkerausgang 69 und dem Spannungsknoten 63 verbunden. Der Verstärkerausgang 69 ist außerdem mit einer Spaltenausleseschaltung 70 verbunden, welche einen Referenzwert-Kondensator 74 eines Referenzwert-Auslesepfads umfasst, wobei der Referenzwert-Kondensator 74 mit einem Anschluss gegen Masse geschaltet und mit dem anderen Anschluss über einen Referenzwertschalter 73 wahlweise mit dem Verstärkerausgang 69 koppelbar ist. Die Spaltenausleseschaltung 70 umfasst ferner einen Signalwert-Kondensator 72 eines Signalwert-Auslesepfads, wobei der Signalwert-Kondensator 72 mit einem Anschluss ebenfalls gegen Masse geschaltet und mit dem anderen Anschluss über einen Signalwertschalter 71 ebenfalls wahlweise mit dem Verstärkerausgang 69 koppelbar ist.

Der Spaltenleitung 41 ist ferner außerhalb des Pixelfelds des Bildsensors eine Vorladeschaltung zugeordnet, welche eine Stromquelle 62 umfasst.

Das Transfer-Gate 21 des jeweiligen Pixels 10 ist über eine Steuerleitung TG1, der Rücksetz-Schalter 26 ist über eine Steuerleitung RES, der Auswahl-Schalter 25 ist über eine Steuerleitung SEL, der Gegenkopplungsschalter 66 ist über eine Steuerleitung FB, der Referenzwertschalter 73 ist über eine Steuerleitung SHR und der Signalwertschalter 71 ist über eine Steuerleitung SHS von einer gemeinsamen Steuerschaltung 40 des Bildsensors steuerbar.

Nachfolgend wird das Funktionsprinzip eines derartigen Pixels 10 exemplarisch, basierend auf einer 3,3 V-CMOS-Technologie, beschrieben. Dieses Verfahren wird auch als "Correlated Double Sampling" (CDS) bezeichnet. Typischerweise können alle Pixel 10 in einer Zeile auf die gleiche Weise und insbesondere parallel ausgelesen werden, so dass es für die Beschreibung des Auslesevorgangs ausreicht, nur diejenigen Pixel 10 zu betrachten, die mit derselben Spaltenleitung 41 verbunden sind.

Das während eines Belichtungsvorgangs einfallende Licht wird von dem lichtempfindlichen Element 20 des jeweiligen Pixels 10 in elektrische Ladung umgewandelt, sodass sich das lichtempfindliche Element 20 mit Elektronen füllt. Während des Belichtungsvorgangs werden die Steuerleitungen TG1, SEL und RES jeweils auf 0 V gehalten, d.h. die hierdurch angesteuerten Schalter 21, 24, 26 sind geöffnet.

Vor dem eigentlichen Auslesen des jeweiligen Pixels 10 wird an die Steuerleitung RES kurzzeitig eine Spannung von 3,3 V angelegt, um durch Leckströme und/oder Streulicht gebildete Ladung aus dem Ausleseknoten 22 zu entfernen, d.h. um den Ausleseknoten 22 zu löschen. Der Ausleseknoten 22 wird also auf einen durch die Spannungsversorgung VDD definierten Ausgangszustand gesetzt. An dem Signalausgang 29 des Wandler-Transistors 24 stellt sich somit eine Spannung ein, die der Ladung an dem gelöschten Ausleseknoten 22 entspricht.

Ferner wird an die Steuerleitung FB eine Spannung von 3,3 V angelegt, um den Gegenkopplungsschalter 66 zu schließen, sodass der Spaltenverstärker 65 gegengekoppelt ist. Hierdurch stellt sich eine Spannung von VREF an dem negativen Eingang 67 des Spaltenverstärkers 65 und somit an dem Spannungsknoten 63 und an dem zugeordneten Anschluss des Eingangskondensators 61 ein.

Zum Auslesen eines Referenzwerts wird an die Steuerleitung SEL eine Spannung von 3,3 V angelegt, sodass der Auswahl-Schalter 25 geschlossen wird. Hierdurch wird ein der Ladung im Ausleseknoten 22 entsprechendes Spannungssignal des Wandler-Transistors 24 über den Auswahl-Schalter 25 auf die Spaltenleitung 41 und somit auf den Eingangskondensator 61 geschaltet. Der Eingangskondensator 61 wird somit auf die Potentialdifferenz zwischen der Referenzspannung VREF und der Spannung auf der Spaltenleitung 41 aufgeladen. Ferner wird der Gegenkopplungsschalter 66 geöffnet (Steuerleitung FB wird auf 0 V gesetzt). Durch den Schaltvorgang entsteht eine geringe Störung (z.B. Ladungsinjektion). Der Spaltenverstärker 65 regelt entsprechend nach. An die Steuerleitung SHR wird nun kurzzeitig eine Spannung von 3,3 V angelegt, um den Referenzwertschalter 73 zu schließen und hierdurch den Referenzwert-Kondensator 74 gemäß dem Verstärkerausgangssignal aufzuladen. Nach einem neuerlichen Öffnen des Referenzwertschalters 73 kann somit ein Referenzwert aus dem Referenzwert-Kondensator 74 ausgelesen werden.

Zum Auslesen eines Signalwerts wird danach an die Steuerleitung TG1 kurzzeitig eine Spannung von 3,3 V oder weniger angelegt, um das Transfer-Gate 21 des jeweiligen Pixels 10 kurzzeitig zumindest teilweise zu öffnen bzw. den hierdurch gebildeten Schalter zu schließen, sodass die belichtungsabhängig erzeugten Elektronen von dem lichtempfindlichen Element 20 zu dem Ausleseknoten 22 transferiert werden. Ein der geänderten Ladung im Ausleseknoten 22 entsprechendes geändertes Spannungssignal des Wandler-Transistors 24 wird über den Auswahl-Schalter 25 (erneut oder immer noch geschlossen) auf die Spaltenleitung 41 und somit zum Eingangskondensator 61 übertragen. Der Spaltenverstärker 65 verstärkt dieses geänderte Signal im Verhältnis der Kapazitäten des Eingangskondensators 61 und des Verstärkerkondensators 64 (Gegenkopplungsschalter 66 bleibt geöffnet) und erzeugt am Verstärkerausgang 69 ein entsprechendes geändertes Verstärkerausgangssignal. Am Ausgang 69 des Spaltenverstärkers 65 liegt nun also eine Spannung an, die ausgehend von dem Ausgangszustand des Ausleseknotens 22 (Offset-Wert) der Spannungsänderung (Spannungsabfall) aufgrund des Transfers von elektrischer Ladung von dem lichtempfindlichen Element 20 zu dem Ausleseknoten 22 entspricht. An die Steuerleitung SHS wird kurzzeitig eine Spannung von 3,3 V angelegt, um den Signalwertschalter 71 zu schließen und hierdurch den Signalwert-Kondensator 72 gemäß dem geänderten Verstärkerausgangssignal aufzuladen. Nach einem neuerlichen Öffnen des Signalwertschalters 71 kann somit ein Signalwert (Bildsignalwert) aus dem Signalwert-Kondensator 72 ausgelesen werden.

Die Differenz zwischen dem ausgelesenen Referenzwert und dem Signalwert entspricht der Ladungsmenge, die durch das Öffnen des Transfer-Gate 21 von dem lichtempfindlichen Element 20 zu dem Ausleseknoten 22 transferiert wurde.

Danach kann gegebenenfalls wieder eine Spannung von 3,3 V kurzzeitig an die Steuerleitung RES angelegt werden, um die vorhandene Ladung aus dem Ausleseknoten 22 zu entfernen und den erläuterten Auslesevorgang für eine weitere Teil-Ladungsmenge zu wiederholen, die durch ein noch stärkeres Öffnen des Transfer-Gate 21 von dem lichtempfindlichen Element 20 zu dem Ausleseknoten 22 transferiert wird (Auslesen eines Referenzwerts und eines Signalwerts).

Schließlich kann noch eine Spannung von 3,3 V kurzzeitig an die Steuerleitungen RES und TG1 angelegt werden, um sowohl die Ladung aus dem Ausleseknoten 22 als auch eventuelle Restladung aus dem lichtempfindlichen Element 20 zu entfernen, damit der nächste Belichtungsvorgang wieder mit einem völlig "leeren" Pixel 10 beginnen kann.

Diese Schritte werden auch für die weiteren, mit der jeweiligen Spaltenleitung 41 verbundenen Pixel 10 durchgeführt.

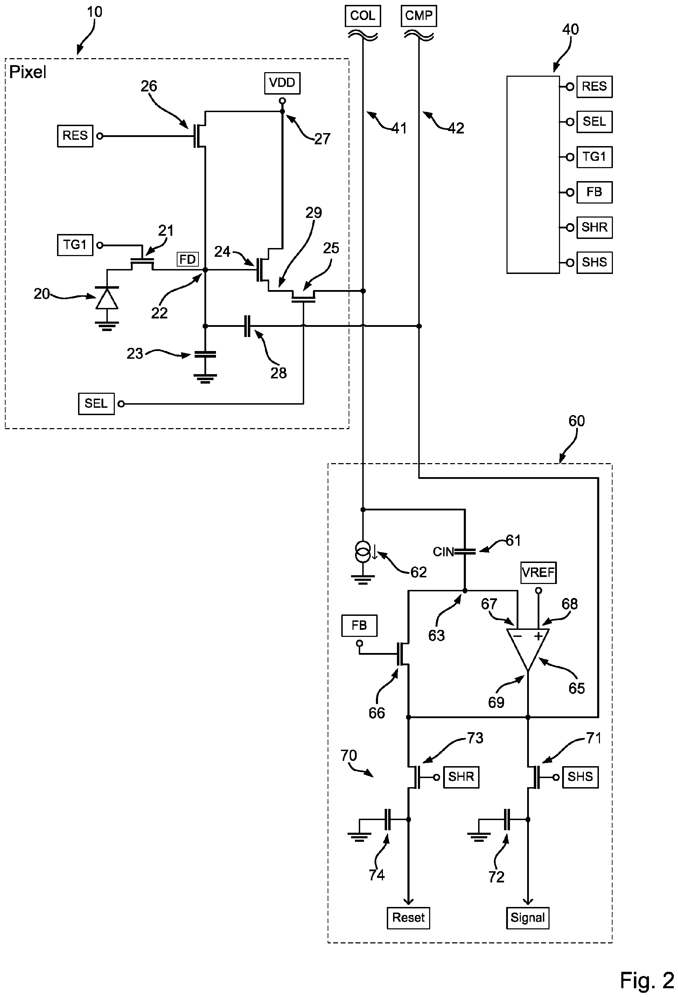

Fig. 2 zeigt Teile eines erfindungsgemäßen Bildsensors, wobei erneut beispielhaft ein Vier-Transistor-Bildsensor illustriert ist und stellvertretend lediglich ein einziges Pixel 10 dargestellt ist, obgleich der Bildsensor eine Vielzahl von in Zeilen und Spalten angeordneten Pixeln 10 aufweist. Nachfolgend werden insbesondere die wesentlichen Unterschiede zu dem Bildsensor gemäß Fig. 1 erläutert.

Ein Unterschied zu dem Bildsensor gemäß Fig. 1 besteht darin, dass das jeweilige Pixel 10 zusätzlich zu der Spaltenleitung 41 mit einer Ausgleichsleitung 42 (CMP) gekoppelt ist, die parallel zu der Spaltenleitung 41 verläuft und ebenso wie die Spaltenleitung 41 einer Spalte von Pixeln 11 zugeordnet ist. Die Ausgleichsleitung 42 ist an einem Ende mit dem Verstärkerausgang 69 des Spaltenverstärkers 65 der zugeordneten Spaltenleitung 41 verbunden. Am anderen Ende verzweigt die Ausgleichsleitung 42 zu den der Spaltenleitung 41 zugeordneten Pixeln 11 und ist über einen jeweiligen Rückkoppelkondensator 28 mit dem Ausleseknoten 22 des jeweiligen Pixels 10 kapazitiv gekoppelt.

Ein weiterer Unterschied zu dem Bildsensor gemäß Fig. 1 besteht darin, dass zwischen dem negativen Eingang 67 des Spaltenverstärkers 65 und dem Verstärkerausgang 69 kein Verstärkerkondensator 64 angeordnet ist, sondern lediglich der Gegenkopplungsschalter 66.

Der Bildsensor gemäß Fig. 2 kann auch bei geringen Ladungsmengen, die von dem lichtempfindlichen Element 20 zu dem Ausleseknoten 22 des jeweiligen Pixels 10 transferiert werden, mit hoher Lichtempfindlichkeit betrieben werden und ermöglicht somit die Aufnahme von Bewegtbildsequenzen auch bei schlechten Lichtverhältnissen. Dies wird durch eine hohe Empfindlichkeit (Steilheit der Verstärkungscharakteristik) des jeweiligen Ausleseknotens 22 erreicht.

Der Wandler-Transistor 24 des jeweiligen Pixels 10, die Spaltenleitung 41, der Eingangskondensator 61, der Spaltenverstärker 65, die Ausgleichsleitung 42 und der Rückkoppelkondensator 28 des jeweiligen Pixels 10 bilden eine jeweilige negative Rückkopplungsschleife für den Ausleseknoten 22 des jeweiligen Pixels 10. Die negative Rückkopplungsschleife bewirkt, dass eine Spannungsänderung im Ausleseknoten 22, welche durch die vom lichtempfindlichen Element 20 zu dem Ausleseknoten 22 transferierten Ladungsträger verursacht wird, durch eine aktive Rückkopplung des Verstärkerausgangs 69 mit dem Ausleseknoten 22 kompensiert wird. Insbesondere kann der Spaltenverstärker 65 einem Spannungsabfall am Ausleseknoten 22 entgegenwirken, indem er die Spannung am Verstärkerausgang 69 bzw. auf der Ausgleichsleitung 42 erhöht, sodass aufgrund der kapazitiven Kopplung über den Rückkoppelkondensator 28 die Spannung am Ausleseknoten 22 im Wesentlichen konstant gehalten werden kann. Parasitäre Kapazitäten am Ausleseknoten 22 (in Fig. 2 durch das Bezugszeichen 23 illustriert) werden somit im Wesentlichen unwirksam. Daher verschlechtert sich die Verstärkungscharakteristik nicht durch die zu dem Ausleseknoten 22 transferierten Ladungsträger und eine hierdurch bewirkte Vergrößerung der (parasitären) Kapazität.

Durch eine Dimensionierung des Rückkoppelkondensators 28 mit einer Kapazität von beispielsweise 40 aF oder weniger kann somit im Ausleseknoten 22 eine Signalspannung von ca. 4000 µV pro Elektron erreicht werden, was einem Rauschwert von 0,05 Elektronen entspricht. Beispielhaft kann als Rückkoppelkondensator 28 ein MIM (Metall-Isolator-Metall) Kondensator verwendet werden, indem man die Kapazität zwischen zwei Leitungsenden verwendet.

Ähnlich wie für den Bildsensor gemäß Fig. 1 erläutert, kann für ein Auslesen des jeweiligen Pixels 10 zunächst ein Gegenkopplungsbetrieb des Spaltenverstärkers 65 erfolgen, um den Eingangskondensator 61 auf einen definierten Startwert zu setzen, und nachfolgend kann ein Verstärkungsbetrieb des Spaltenverstärkers 65 erfolgen. In dem Verstärkungsbetrieb kann der Spaltenverstärker 65 in Abhängigkeit von dem über die Spaltenleitung 41 an dem Eingangskondensator 61 empfangenen Spannungssignal des Wandler-Transistors 24 das Verstärkerausgangssignal erzeugen und über die Ausgleichsleitung 42 an den Rückkoppelkondensator 28 ausgeben.

Nachfolgend wird ein möglicher Auslesevorgang beschrieben.

Vor dem eigentlichen Auslesen des jeweiligen Pixels 10 wird an die Steuerleitung RES kurzzeitig eine Spannung von 3,3 V angelegt, um den Rücksetz-Schalter 26 kurzzeitig zu schließen und den Ausleseknoten 22 zu löschen (Ausgangszustand des Ausleseknotens 22). An dem Signalausgang 29 des Wandler-Transistors 24 stellt sich somit eine Spannung ein, die der (Rest-)Ladung an dem gelöschten Ausleseknoten 22 entspricht. Ferner ist an die Steuerleitung FB eine Spannung von 3,3 V angelegt, um den Gegenkopplungsschalter 66 zu schließen, sodass der Spaltenverstärker 65 gegengekoppelt ist. Hierdurch stellt sich eine Spannung von VREF an dem negativen Eingang 67 des Spaltenverstärkers 65 und somit auch an dem Spannungsknoten 63 und an dem zugeordneten Anschluss des Eingangskondensators 61 ein.

Zum Auslesen eines Referenzwerts wird an die Steuerleitung SEL eine Spannung von 3,3 V angelegt, sodass der Auswahl-Schalter 25 geschlossen wird. Hierdurch wird ein der Ladung im Ausleseknoten 22 bzw. dem bzw. dem Ausgangszustand des Ausleseknotens 22 entsprechendes Spannungssignal des Wandler-Transistors 24 über den Auswahl-Schalter 25 auf die Spaltenleitung 41 und somit auf den Eingangskondensator 61 geschaltet. Der Eingangskondensator 61 wird somit auf die Potentialdifferenz zwischen der Referenzspannung VREF des Spaltenverstärkers 65 und der Spannung auf der Spaltenleitung 41 aufgeladen.

Ferner wird der Gegenkopplungsschalter 66 geöffnet. Durch den Schaltvorgang entsteht eine geringe Störung (z.B. Ladungsinjektion). Der Spaltenverstärker 65 regelt entsprechend dem an den beiden Eingängen 67, 68 vorliegenden Spannungsunterschied nach. An die Steuerleitung SHR ist zu diesem Zeitpunkt oder wird nun eine Spannung von 3,3 V angelegt, um den Referenzwertschalter 73 zu schließen und hierdurch den Referenzwert-Kondensator 74 gemäß dem Verstärkerausgangssignal aufzuladen. Nach einem neuerlichen Öffnen des Referenzwertschalters 73 kann somit ein Referenzwert aus dem Referenzwert-Kondensator 74 ausgelesen werden.

Zum Auslesen eines Signalwerts wird danach an die Steuerleitung TG1 kurzzeitig eine Spannung von 3,3 V oder weniger angelegt, um das Transfer-Gate 21 des jeweiligen Pixels 10 kurzzeitig teilweise oder vollständig zu öffnen, sodass die belichtungsabhängig erzeugten Elektronen (oder ein Teil hiervon) von dem lichtempfindlichen Element 20 zu dem Ausleseknoten 22 transferiert werden. In diesem Zeitraum kann der Auswahl-Schalter 25 für die Verbindung zu der Spaltenleitung 41 kurzzeitig geöffnet werden, oder der Auswahl-Schalter 25 kann geschlossen bleiben. Ein der geänderten Ladung im Ausleseknoten 22 entsprechendes geändertes Spannungssignal des Wandler-Transistors 24 wird über den Auswahl-Schalter 25 auf die Spaltenleitung 41 und somit zum Eingangskondensator 61 übertragen. Aufgrund der Kopplung des Eingangskondensators 61 mit dem negativen Eingang 67 des Spaltenverstärkers 65 ergibt sich eine Potentialänderung an dem negativen Eingang 67. Der Spaltenverstärker 65 erzeugt am Verstärkerausgang 69 ein geändertes Verstärkerausgangssignal, das dem Potentialunterschied zwischen den beiden Eingängen 67, 68, also der weiteren Potentialänderung relativ zu VREF entspricht. Das Verstärkerausgangssignal repräsentiert somit die elektrische Ladung, die ausgehend von dem Ausgangszustand des Ausleseknotens 22 (Offset-Wert) durch das Öffnen des Transfer-Gate 21 von dem lichtempfindlichen Element 20 zu dem Ausleseknoten 22 transferiert wurde. Der Spaltenverstärker 65 kompensiert die Wirkung der Ladung in dem Ausleseknoten 22 des jeweiligen Pixels 10, indem die Spannung auf der Ausgleichsleitung 42 gemäß dem Verstärkerausgangssignal ansteigt, bis (aufgrund der kapazitiven Kopplung mit dem Ausleseknoten 22) die Spannung in dem Ausleseknoten 22 wieder dem ursprünglichen Wert entspricht.

An die Steuerleitung SHS wird eine Spannung von 3,3 V angelegt, um den Signalwertschalter 71 kurzzeitig zu schließen und hierdurch den Signalwert-Kondensator 72 gemäß dem Verstärkerausgangssignal aufzuladen. Nach einem neuerlichen Öffnen des Signalwertschalters 71 kann somit ein Signalwert (Bildsignalwert) aus dem Signalwert-Kondensator 72 ausgelesen werden. Ferner kann die Differenz zwischen dem ausgelesenen Referenzwert und dem ausgelesenen Signalwert gebildet werden.

Zusätzlich zu dem Erzeugen des Signalwerts wird das Verstärkerausgangssignal jedoch auch für die erläuterte negative Rückkopplung verwendet. Hierfür wird das Verstärkerausgangssignal, wie erläutert, über die Ausgleichsleitung 42 auch auf den Rückkoppelkondensator 28 des jeweiligen Pixels 10 geleitet, um die Spannung an dem Ausleseknoten 22 im Wesentlichen konstant zu halten.

Dieser Auslesevorgang kann zumindest für geringe Ladungsmengen bzw. bei geringer Belichtung durchgeführt werden. Der Auslesevorgang kann auch mehrmals wiederholt werden, um durch mehrmaliges, zunehmendes Öffnen des Transfer-Gate 21 Teil-Ladungsmengen zu dem Ausleseknoten 22 zu transferieren und auszulesen.

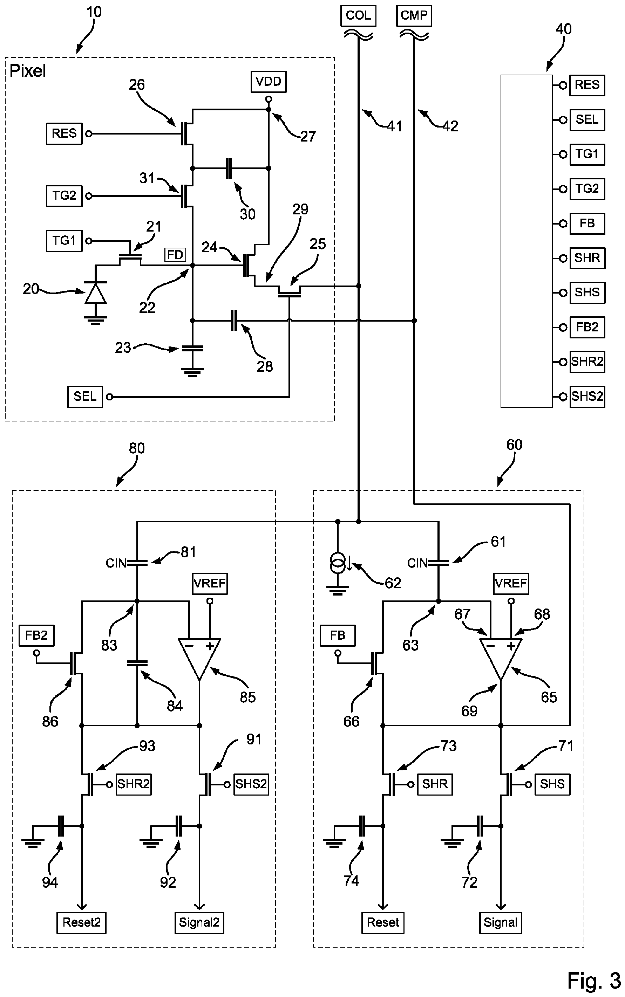

Um eine hohe Dynamik zu erreichen, kann das Ausleseverfahren mit anderen Ausleseverfahren kombiniert werden, die es erlauben, eine höhere Anzahl von Elektronen gleichzeitig auszulesen. Beispielsweise kann vor oder nach dem erläuterten Auslesevorgang ein Auslesevorgang erfolgen, bei dem der Gegenkopplungsschalter 66 geschlossen bleibt. Dann liegt auf der Ausgleichsleitung 42 dauerhaft die Spannung VREF an, wobei das Pixel 10 sich wie ein gewöhnliches Vier-Transistor-Pixel verhält. Beispielsweise kann für große Ladungsmengen auch eine alternative Verstärkerschaltung 80 verwendet werden, wie nachfolgend im Zusammenhang mit Fig. 3 erläutert wird.

Fig. 3 illustriert zum einen, dass parallel zu der erläuterten Verstärkerschaltung mit Rückkopplung über eine Ausgleichsleitung 42 (in Fig. 3 mit dem Bezugszeichen 60 gekennzeichnet) auch eine weitere Verstärkerschaltung 80 für große Ladungsmengen vorgesehen sein kann (gleichartige Elemente wie bei der Verstärkerschaltung 60 sind bei der Verstärkerschaltung 80 mit um die Zahl 20 erhöhten Bezugszeichen gekennzeichnet). Hierdurch können für unterschiedliche Ladungsmengen in dem lichtempfindlichen Element 20 unterschiedliche Verstärkungsfaktoren (sogenannter "gain") vorgesehen sein, beispielsweise bei der Verstärkerschaltung 80 ein geringerer Verstärkungsfaktor als bei der Verstärkerschaltung 60. Ein derartiger auswählbarer zweifacher Verstärkungsfaktor (sogenannter "dual gain") kann auch bei einem Vier-Transistor-Pixel 10 gemäß Fig. 2 vorgesehen sein.

Bei anderen Ausführungsformen (nicht gezeigt) kann zusätzlich zu den Verstärkerschaltungen 60 und 80, und zwar parallel hierzu, noch eine weitere Verstärkerschaltung 80 mit einem anderen Verstärkungsfaktor vorgesehen sein (sogenannter "triple gain").

Fig. 3 illustriert zum anderen, dass der Rückkoppelkondensator 28 gemäß Fig. 2 beispielsweise auch bei einem Fünf-Transistor-Bildsensor vorgesehen sein kann. Das jeweilige Pixel 10 gemäß Fig. 3 umfasst zusätzlich einen Überlauf-Kondensator 30 und ein weiteres Transfer-Gate 31. Das weitere Transfer-Gate 31 kann von der Steuerschaltung 40 über eine Steuerleitung TG2 wahlweise dazu angesteuert werden, den Ausleseknoten 22 mit dem Überlauf-Kondensator 30 zu koppeln. Hierdurch kann die Kapazität des Ausleseknotens 22 wahlweise temporär erhöht werden, um bei hoher Belichtung des Pixels 10 große Ladungsmengen, die in dem lichtempfindlichen Element 20 erzeugt werden, aufnehmen zu können. Die hiermit verbundene (temporäre) Erhöhung der Kapazität des Ausleseknotens 22 wirkt sich insofern nicht nachteilig auf die Lichtempfindlichkeit aus, als bei hoher Belichtung ohnehin ein hohes Signal/Rausch-Verhältnis erzielt wird.

Für hohe Belichtungen, und insbesondere für ein Auslesen eines Überlauf-Kondensators 30 gemäß Fig. 3, kann die Verstärkerschaltung 80 verwendet werden, welche der im Zusammenhang mit Fig. 1 erläuterten Verstärkerschaltung entspricht. Für hohe Belichtungen können auch parallel zueinander mehrere gleichartige Verstärkerschaltungen 80 vorgesehen sein, die jedoch unterschiedliche Verstärkungsfaktoren aufweisen (z.B. mit unterschiedlich großen Verstärkerkondensatoren 84), wie vorstehend erläutert.

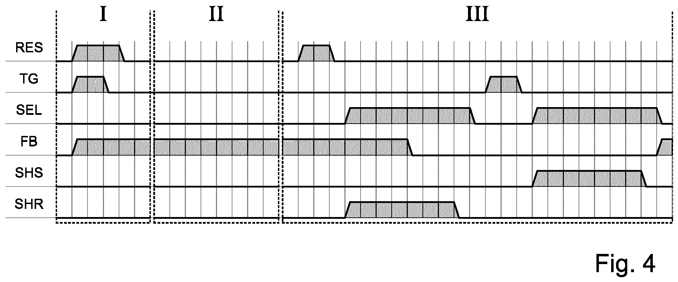

Fig. 4 veranschaulicht ein Schaltdiagram für eine Steuerschaltung 40 eines Bildsensors gemäß Fig. 2. Gezeigt ist der zeitliche Schaltablauf für einen Rücksetz-Schalter 26 (RES), ein Transfer-Gate 21 (TG), einen Auswahl-Schalter 25 (SEL), einen Gegenkopplungsschalter 66 (FB), einen Signalwertschalter 71 (SHS) und einen Referenzwertschalter 73 (SHR).

Vor der Belichtung des jeweiligen Pixels 10 (Zeitabschnitt I links der beiden vertikalen Balken) werden der Rücksetz-Schalter 26 (RES) kurzzeitig geschlossen und das Transfer-Gate 21 (TG) kurzzeitig geöffnet, um das lichtempfindliche Element 20 zu entleeren, d.h. die dort vorhandenen Ladungsträger zu entfernen. Seitens des Spaltenverstärkers 65 wird der Gegenkopplungsschalter 66 (FB) geschlossen. Nun kann die Belichtung des Pixels 10 erfolgen (Zeitabschnitt II).

Zum Ende der Belichtung (Zeitabschnitt III rechts der beiden vertikalen Balken) wird der Auslesevorgang des Pixels 10 eingeleitet, indem der Rücksetz-Schalter 26 (RES) kurzzeitig geschlossen wird, um durch Leckströme und/oder Streulicht gebildete Ladung aus dem Ausleseknoten 22 zu entfernen.

Anschließend werden der Auswahlschalter 25 (SEL) und der Referenzwertschalter 73 (SHR) geschlossen, sodass ein der (Rest-)Ladung am Ausleseknoten 22 entsprechendes Spannungssignal des Wandler-Transistors 24 über die Spaltenleitung 41 zu dem Eingangskondensator 61 gelangt. Gleichzeitig sorgt der am Spaltenverstärker 65 geschlossene Gegenkopplungsschalter 66 (FB) zunächst dafür, dass der Spaltenverstärker 65 im Gegenkopplungsbetrieb arbeitet und am negativen Spannungseingang 67 des Spaltenverstärkers 65 die Referenzspannung VREF anliegt. Die Potenzialdifferenz zwischen der Spaltenleitung 41 und dem negativen Eingang des Spaltenverstärkers 65 führt dazu, dass sich der Eingangskondensator 61 entsprechend auflädt. Der Gegenkopplungsschalter 66 (FB) wird nun geöffnet, so dass der Spaltenverstärker 65 in einen Verstärkungsbetrieb übergeht. Das nun vorliegende Verstärkerausgangssignal liegt an der Ausgleichsleitung 42. Über den geschlossenen Referenzwertschalter 73 (SHR) kann der Referenzwert-Kondensator 74 gemäß dem Verstärkerausgangssignal bzw. der Spannung am Verstärkerausgang 69 aufgeladen werden. Danach werden der Referenzwertschalter 73 (SHR) und der Auswahl-Schalter 25 (SEL) geöffnet. Der Referenzwert-Kondensator 74 kann nun oder später ausgelesen werden.

Anschließend erfolgt das Auslesen des Signalspannungswerts. Hierfür wird das Transfer-Gate 21 (TG) kurzzeitig geschlossen, sodass Ladung von dem lichtempfindlichen Element 20 auf den Ausleseknoten 22 gelangen kann. Danach werden der Auswahl-Schalter 25 (SEL) und der Signalwertschalter 71 (SHS) geschlossen. Hierdurch werden die Spannung an dem Eingangskondensator 61 und somit das Verstärkerausgangssignal geändert, welches den Signalwert-Kondensator 72 auflädt. Zugleich erfolgt eine negative Rückkopplung an den Ausleseknoten 22. Hierfür wird der Verstärkerausgang 69 des Spaltenverstärkers 65, dessen Verstärkerausgangssignal über den Wandler-Transistor 24, die Spaltenleitung 41 und den Eingangskondensator 61 von der Ladung im Ausleseknoten 22 abhängt, über die Ausgleichsleitung 42 und den Rückkoppelkondensator 28 an den Ausleseknoten 22 mit negativem Vorzeichen rückgekoppelt. In diesem Rückkopplungsbetrieb kompensiert der Spaltenverstärker 65 einen durch den Ladungstransfer am Ausleseknoten 22 verursachten Spannungsabfall, indem der Spaltenverstärker 65 die Spannung am Verstärkerausgang 69 und somit an der Ausgleichsleitung 42 erhöht. Danach werden der Signalwertschalter 71 (SHS) und der Auswahl-Schalter 25 (SEL) geöffnet. Der Signalwert-Kondensator 72 kann nun oder später ausgelesen werden. Basierend auf der Differenz zwischen den ausgelesenen Signal- und Referenzwerten kann anschließend ein Offset-korrigierter Wert ermittelt werden, der einem Belichtungswert des Pixels 10 entspricht.

### Bezugszeichenliste

- 10: Pixel
- 20: lichtempfindliches Element
- 21: Transfer-Gate
- 22: Ausleseknoten
- 23: parasitäre Kapazität
- 24: Wandler-Transistor
- 25: Auswahl-Schalter
- 26: Rücksetz-Schalter
- 27: Anschluss der Spannungsversorgung
- 28: Rückkoppelkondensator
- 29: Signalausgang des Wandler-Transistors
- 30: Überlaufkondensator
- 31: weiteres Transfer-Gate
- 40: Steuerschaltung
- 41: Spaltenleitung
- 42: Ausgleichsleitung
- 60: Verstärkerschaltung für geringe Ladungsmengen
- 61, 81: Eingangskondensator
- 62: Stromquelle
- 63, 83: Spannungsknoten
- 64, 84: Verstärkerkondensator
- 65, 85: Spaltenverstärker
- 66, 86: Gegenkopplungsschalter
- 67: negativer Eingang des Spaltenverstärkers
- 68: positiver Eingang des Spaltenverstärkers
- 69: Verstärkerausgang
- 70: Spaltenausleseschaltung
- 71, 91: Signalwertschalter
- 72, 92: Signalwert-Kondensator
- 73, 93: Referenzwertschalter
- 74, 94: Referenzwert-Kondensator
- 80: Verstärkerschaltung für große Ladungsmengen

## Patentansprüche

1. Bildsensor, insbesondere CMOS-Bildsensor, für elektronische Kameras, mit einer Vielzahl von Pixeln (10) zur Erzeugung von belichtungsabhängigen Signalen, wobei ein jeweiliges der Vielzahl von Pixel (10) zumindest umfasst:
- ein lichtempfindliches Element (20), um aus einfallendem Licht elektrische Ladung zu erzeugen,
- einen Ausleseknoten (22),
- ein Transfer-Gate (21), um wahlweise das lichtempfindliche Element mit dem Ausleseknoten (22) zu koppeln,
- einen Wandler-Transistor (24), um die an dem Ausleseknoten (22) vorhandene Ladung in ein Spannungssignal an einem Signalausgang (29) umzusetzen, und
- einen Auswahl-Schalter (25), der mit dem Signalausgang (29) des Wandler-Transistors (24) verbunden ist, um den Signalausgang (29) des Wandler-Transistors (24) wahlweise mit einer Spaltenleitung (41) des Bildsensors zu koppeln, die mehreren Pixeln (10) des Bildsensors zugeordnet ist;
wobei der Spaltenleitung (41) ein Spaltenverstärker (65) zugeordnet ist,
wobei die Spaltenleitung (41) über einen Eingangskondensator (61) mit einem negativen Eingang (67) des Spaltenverstärkers (65) gekoppelt oder koppelbar ist, wobei der Spaltenverstärker (65) einen Verstärkerausgang (69) zum Ausgeben eines Verstärkerausgangssignals aufweist, wobei der Verstärkerausgang (69) mit einer Spaltenausleseschaltung (70) und mit einer Ausgleichsleitung (42) verbunden ist, wobei die Ausgleichsleitung (42) über einen jeweiligen Rückkoppelkondensator (28) mit dem jeweiligen Ausleseknoten (22) der der Spaltenleitung (41) zugeordneten Pixel (10) gekoppelt ist,
**dadurch gekennzeichnet,**
**dass** die Ausgleichsleitung (42) direkt mit dem Rückkoppelkondensator (28) verbunden ist.

2. Bildsensor nach Anspruch 1,
wobei der Spaltenverstärker (65) dazu ausgebildet ist, das Verstärkerausgangssignal in Abhängigkeit von dem über die Spaltenleitung (41) an dem Eingangskondensator (61) empfangenen Spannungssignal des Wandler-Transistors (24) des jeweiligen Pixels (10) zu erzeugen und das Verstärkerausgangssignal an die Spaltenausleseschaltung (70) und über die Ausgleichsleitung (42) an den Rückkoppelkondensator (28) auszugeben.

3. Bildsensor nach Anspruch 2,
wobei die Spaltenausleseschaltung (70) dazu ausgebildet ist, das Verstärkerausgangssignal auszulesen.

4. Bildsensor nach einem der vorstehenden Ansprüche,
wobei der Wandler-Transistor (24) des jeweiligen Pixels (10), die Spaltenleitung (41), der Eingangskondensator (61), der Spaltenverstärker (65), die Ausgleichsleitung (42) und der Rückkoppelkondensator (28) des jeweiligen Pixels (10) eine negative Rückkopplungsschleife für den Ausleseknoten (22) des jeweiligen Pixels (10) bilden.

5. Bildsensor nach Anspruch 4,
wobei der Eingangskondensator (61), der Spaltenverstärker (65) und der Rückkoppelkondensator (28) des jeweiligen Pixels (10) dazu ausgebildet sind, eine Spannung an dem Ausleseknoten (22) des jeweiligen Pixels (10) im Wesentlichen konstant zu halten.

6. Bildsensor nach Anspruch 4 oder 5,
wobei der Eingangskondensator (61), der Spaltenverstärker (65) und der Rückkoppelkondensator (28) des jeweiligen Pixels (10) dazu ausgebildet sind, im Falle eines Ladungszuwachses an dem Ausleseknoten (22) des jeweiligen Pixels (10) eine Spannung an der Ausgleichsleitung (42) zu erhöhen und hierdurch eine Spannungsänderung an dem Ausleseknoten (22) im Wesentlichen zu kompensieren.

7. Bildsensor nach einem der vorstehenden Ansprüche,
wobei der Spaltenverstärker (65) einen positiven Verstärkereingang (68) umfasst, an dem eine Referenzspannung (VREF) anliegt.

8. Bildsensor nach Anspruch 7,
wobei der negative Verstärkereingang (67) über einen Gegenkopplungsschalter (66) mit dem Verstärkerausgang verbindbar ist,
wobei durch ein Schließen des Gegenkopplungsschalters (66) der Spaltenverstärker (65) in einen Gegenkopplungsbetrieb bringbar ist, in dem an dem Eingangskondensator (61) eine Potentialdifferenz zwischen der Spannung an der Spaltenleitung (41) und der Referenzspannung (VREF) eingestellt ist, und
wobei durch ein Öffnen des Gegenkopplungsschalters (66) der Spaltenverstärker (65) in einen Verstärkungsbetrieb bringbar ist, in dem das Verstärkerausgangssignal eine gegenüber dem Gegenkopplungsbetrieb geänderte Potentialdifferenz an dem Eingangskondensator (61) repräsentiert.

9. Bildsensor nach Anspruch 8,
wobei der Bildsensor eine Steuerschaltung (40) aufweist, die dazu ausgebildet ist, für ein Auslesen des jeweiligen Pixels (10) zunächst den Spaltenverstärker (65) in den Gegenkopplungsbetrieb zu bringen; nachfolgend den Spaltenverstärker (65) in den Verstärkungsbetrieb zu bringen; danach das Transfer-Gate (21) des jeweiligen Pixels (10) kurzzeitig zumindest teilweise zu öffnen, um Ladung in den Ausleseknoten (22) des jeweiligen Pixels (10) zu übertragen; und danach die Spaltenausleseschaltung (70) zum Auslesen eines Signalwerts anzusteuern.

10. Bildsensor nach Anspruch 9,
wobei das jeweilige Pixel (10) ferner einen Rücksetz-Schalter (26) aufweist, um wahlweise den Ausleseknoten (22) mit einem Rücksetz-Potential (VDD) zu koppeln,
wobei die Steuerschaltung (40) dazu ausgebildet ist, den Rücksetz-Schalter (26) des jeweiligen Pixels (10) kurzzeitig zu schließen, um in dem Ausleseknoten (22) des jeweiligen Pixels (10) vorhandene Ladung zu löschen; und danach, in dem Verstärkungsbetrieb des Spaltenverstärkers (65) und vor dem Öffnen des Transfer-Gate (21), die Spaltenausleseschaltung (70) zum Auslesen eines Referenzwerts anzusteuern.

11. Bildsensor nach einem der vorstehenden Ansprüche,
wobei das jeweilige Pixel (10) ferner umfasst:
- einen Überlauf-Kondensator (30), und
- ein weiteres Transfer-Gate (31), um wahlweise den Ausleseknoten (22) mit dem Überlauf-Kondensator (30) zu koppeln.

## Claims

1. An image sensor, in particular a CMOS image sensor, for electronic cameras, said image sensor comprising a plurality of pixels (10) for generating exposure-dependent signals, wherein a respective one of the plurality of pixels (10) at least comprises:
- a light-sensitive element (20) to generate electric charge from incident light;
- a readout node (22);
- a transfer gate (21) to selectively couple the light-sensitive element to the readout node (22);
- a converter transistor (24) to convert the charge present at the readout node (22) into a voltage signal at a signal output (29); and
- a selection switch (25) which is connected to the signal output (29) of the converter transistor (24) to selectively couple the signal output (29) of the converter transistor (24) to a column line (17) of the image sensor which is associated with a plurality of pixels (10) of the image sensor;
wherein a column amplifier (65) is associated with the column line (41), wherein the column line (41) is coupled or can be coupled to a negative input (67) of the column amplifier (65) via an input capacitor (61), wherein the column amplifier (65) has an amplifier output (69) for outputting an amplifier output signal, wherein the amplifier output (69) is connected to a column readout circuit (70) and to a compensation line (42), wherein the compensation line (42) is coupled via a respective feedback capacitor (28) to the respective readout node (22) of the pixels (10) associated with the column line (41),
**characterized in that**
the compensation line (42) is directly connected to the feedback capacitor (28).

2. An image sensor according to claim 1,
wherein the column amplifier (65) is configured to generate the amplifier output signal in dependence on the voltage signal of the converter transistor (24) of the respective pixel (10) received via the column line (41) at the input capacitor (61) and to output the amplifier output signal to the column readout circuit (70) and, via the compensation line (42), to the feedback capacitor (28).

3. An image sensor according to claim 2,
wherein the column readout circuit (70) is configured to read out the amplifier output signal.

4. An image sensor according to any one of the preceding claims,
wherein the converter transistor (24) of the respective pixel (10), the column line (41), the input capacitor (61), the column amplifier (65), the compensation line (42) and the feedback capacitor (28) of the respective pixel (10) form a counter-feedback loop for the readout node (22) of the respective pixel (10).

5. An image sensor according to claim 4,
wherein the input capacitor (61), the column amplifier (65) and the feedback capacitor (28) of the respective pixel (10) are configured to keep a voltage at the readout node (22) of the respective pixel (10) substantially constant.

6. An image sensor according to claim 4 or claim 5,
wherein the input capacitor (61), the column amplifier (65) and the feedback capacitor (28) of the respective pixel (10) are configured, in the event of a charge increase at the readout node (22) of the respective pixel (10), to increase a voltage at the compensation line (42) and hereby to substantially compensate a voltage change at the readout node (22).

7. An image sensor according to any one of the preceding claims,
wherein the column amplifier (65) comprises a positive amplifier input (68) to which a reference voltage (VREF) is applied.

8. An image sensor according to claim 7,
wherein the negative amplifier input (67) can be connected to the amplifier output via a negative feedback switch (66),
wherein, by closing the negative feedback switch (66), the column amplifier (65) can be brought into a negative feedback mode in which a potential difference between the voltage at the column line (41) and the reference voltage (VREF) is set at the input capacitor (61), and
wherein, by opening the negative feedback switch (66), the column amplifier (65) can be brought into an amplification mode in which the amplifier output signal represents a potential difference at the input capacitor (61) that is changed with respect to the negative feedback mode.

9. An image sensor according to claim 8,
wherein the image sensor has a control circuit (40) which is configured to first bring the column amplifier (65) into the negative feedback mode for a readout of the respective pixel (10); subsequently to bring the column amplifier (65) into the amplification mode; thereafter to at least partly open the transfer gate (21) of the respective pixel (10) for a short time in order to transmit charge into the readout node (22) of the respective pixel (10); and then to control the column readout circuit (70) to read out a signal value.

10. An image sensor according to claim 9,
wherein the respective pixel (10) further has a reset switch (26) to selectively couple the readout node (22) to a reset potential (VDD), wherein the control circuit (40) is configured to briefly close the reset switch (26) of the respective pixel (10) to remove charge present in the readout node (22) of the respective pixel (10); and thereafter, in the amplification mode of the column amplifier (65) and before opening the transfer gate (21), to control the column readout circuit (70) to read out a reference value.

11. An image sensor according to any one of the preceding claims,
wherein the respective pixel (10) further comprises:
- an overflow capacitor (30); and
- a further transfer gate (31) to selectively couple the readout node (22) to the overflow capacitor (30).

## Revendications

1. Capteur d'image, en particulier capteur d'image CMOS, pour caméras électroniques, présentant une pluralité de pixels (10) pour générer des signaux dépendant de l'exposition, un pixel respectif de la pluralité de pixels (10) comprenant au moins :
- un élément photosensible (20) pour générer une charge électrique à partir de la lumière incidente,
- un noeud de lecture (22),
- une porte de transfert (21) pour coupler sélectivement l'élément photosensible au noeud de lecture (22),
- un transistor de conversion (24) pour convertir la charge, présente sur le noeud de lecture (22), en un signal de tension sur une sortie de signal (29), et
- un commutateur de sélection (25) relié à la sortie de signal (29) du transistor de conversion (24) pour coupler sélectivement la sortie de signal (29) du transistor de conversion (24) à une ligne de colonne (41) du capteur d'image, qui est associée à plusieurs pixels (10) du capteur d'image ;
dans lequel
un amplificateur de colonne (65) est associé à la ligne de colonne (41),
la ligne de colonne (41) est couplée ou peut être couplée à une entrée négative (67) de l'amplificateur de colonne (65) par l'intermédiaire d'un condensateur d'entrée (61),
l'amplificateur de colonne (65) présente une sortie d'amplificateur (69) pour émettre un signal de sortie d'amplificateur,
la sortie d'amplificateur (69) est reliée à un circuit de lecture de colonne (70) et à une ligne de compensation (42),
la ligne de compensation (42) est couplée au noeud de lecture respectif (22) des pixels (10), associés à la ligne de colonne (41), par l'intermédiaire d'un condensateur de rétroaction respectif (28),
**caractérisé en ce que**
la ligne de compensation (42) est reliée directement au condensateur de rétroaction (28).

2. Capteur d'image selon la revendication 1,
dans lequel l'amplificateur de colonne (65) est conçu pour générer le signal de sortie d'amplificateur en fonction du signal de tension du transistor de conversion (24) du pixel respectif (10), reçu au niveau du condensateur d'entrée (61) via la ligne de colonne (41), et pour émettre le signal de sortie d'amplificateur au circuit de lecture de colonne (70) et, via la ligne de compensation (42), au condensateur de rétroaction (28).

3. Capteur d'image selon la revendication 2,
dans lequel le circuit de lecture de colonne (70) est conçu pour lire le signal de sortie d'amplificateur.

4. Capteur d'image selon l'une des revendications précédentes,
dans lequel le transistor de conversion (24) du pixel respectif (10), la ligne de colonne (41), le condensateur d'entrée (61), l'amplificateur de colonne (65), la ligne de compensation (42) et le condensateur de rétroaction (28) du pixel respectif (10) forment une boucle de rétroaction négative pour le noeud de lecture (22) du pixel respectif (10).

5. Capteur d'image selon la revendication 4,
dans lequel le condensateur d'entrée (61), l'amplificateur de colonne (65) et le condensateur de rétroaction (28) du pixel respectif (10) sont conçus pour maintenir sensiblement constante une tension au niveau du noeud de lecture (22) du pixel respectif (10).

6. Capteur d'image selon la revendication 4 ou 5,
dans lequel le condensateur d'entrée (61), l'amplificateur de colonne (65) et le condensateur de rétroaction (28) du pixel respectif (10) sont conçus pour augmenter une tension sur la ligne de compensation (42) en cas de croissance de la charge au niveau du noeud de lecture (22) du pixel respectif (10) et pour compenser ainsi sensiblement une variation de la tension sur le noeud de lecture (22).

7. Capteur d'image selon l'une des revendications précédentes,
dans lequel l'amplificateur de colonne (65) comprend une entrée d'amplificateur positive (68) à laquelle est appliquée une tension de référence (VREF).

8. Capteur d'image selon la revendication 7,
dans lequel l'entrée d'amplificateur négative (67) peut être reliée à la sortie d'amplificateur par l'intermédiaire d'un commutateur de contre-réaction (66), une fermeture du commutateur de contre-réaction (66) permet d'amener l'amplificateur de colonne (65) dans un mode de contre-réaction dans lequel une différence de potentiel entre la tension sur la ligne de colonne (41) et la tension de référence (VREF) est réglée sur le condensateur d'entrée (61), et
une ouverture du commutateur de contre-réaction (66) permet d'amener l'amplificateur de colonne (65) dans un mode d'amplification dans lequel le signal de sortie d'amplificateur représente une différence de potentiel sur le condensateur d'entrée (61), qui est modifiée par rapport au mode de contre-réaction.

9. Capteur d'image selon la revendication 8,
dans lequel le capteur d'image comprend un circuit de commande (40) qui est conçu pour amener d'abord l'amplificateur de colonne (65) dans le mode de contre-réaction afin de lire le pixel respectif (10) ; ensuite amener l'amplificateur de colonne (65) dans le mode d'amplification ; ensuite ouvrir au moins partiellement et brièvement la porte de transfert (21) du pixel respectif (10) afin de transférer une charge dans le noeud de lecture (22) du pixel respectif (10) ; et ensuite commander le circuit de lecture de colonne (70) afin de lire une valeur de signal.

10. Capteur d'image selon la revendication 9,
dans lequel le pixel respectif (10) comprend en outre un commutateur de réinitialisation (26) afin de coupler sélectivement le noeud de lecture (22) à un potentiel de réinitialisation (VDD),
le circuit de commande (40) est conçu pour fermer brièvement le commutateur de réinitialisation (26) du pixel respectif (10) afin d'effacer la charge présente dans le noeud de lecture (22) du pixel respectif (10) ; et ensuite, dans le mode d'amplification de l'amplificateur de colonne (65) et avant l'ouverture de la porte de transfert (21), commander le circuit de lecture de colonne (70) afin de lire une valeur de référence.

11. Capteur d'image selon l'une des revendications précédentes,
dans lequel le pixel respectif (10) comprend en outre :
- un condensateur de débordement (30), et
- une autre porte de transfert (31) pour coupler sélectivement le noeud de lecture (22) au condensateur de débordement (30).
